# EUROPÄISCHE PATENTSCHRIFT

(11) **EP 0 682 785 B1**
(45) Veröffentlichungstag und Bekanntmachung des Hinweises auf die Patenterteilung: **27.01.1999**
(21) Anmeldenummer: 95903283.0
(22) Anmeldetag: 26.11.1994
(51) Int. Cl.: G05B 19/05

(54) **LANDMASCHINE, INSBESONDERE MÄHDRESCHER, MIT MULTIPROZESSOR-LEITVORRICHTUNG**
AGRICULTURAL MACHINE, ESPECIALLY COMBINE HARVESTER, WITH MULTI-PROCESSOR GUIDE SYSTEM
MACHINE AGRICOLE, NOTAMMENT MOISSONNEUSE-BATTEUSE, A DISPOSITIF DE GUIDAGE A MULTIPROCESSEURS

(30) Priorität: 08.12.1993 DE 4341834
(43) Veröffentlichungstag der Anmeldung: 22.11.1995
(73) Patentinhaber: CLAAS OHG beschränkt haftende offene Handelsgesellschaft, D-33428 Harsewinkel (DE)
(72) Erfinder: HIERONYMUS, Peter, D-33758 Schloss Holte (DE); DIEKHANS, Norbert, D-33335 Gütersloh (DE); BEHNKE, Willi, D-33803 Steinhagen (DE)
(74) Vertreter: Hanewinkel, Lorenz, Dipl.-Phys.
(86) Internationale Anmeldenummer: EP9403912
(87) Internationale Veröffentlichungsnummer: WO9516225

(56) Entgegenhaltungen:
- DD-A- 277 606
- US-A- 4 277 833
- US-A- 4 376 298
- US-A- 4 630 191
- LANDTECHNIK, Bd. 47, Februar 1992 DE, Seiten 71-74, KLAUS GOTTSCHALK 'FEHLERDIAGNOSE AN VERTEILTEN MIKRORECHNERSYSTEMEN FÜR MOBILE LANDMASCHINEN' in der Anmeldung erwähnt

## Beschreibung

Die Erfindung betrifft eine Landmaschine, insbesondere einen Mähdrescher, die aus Teilvorrichtungen mit zugeordneten Mikroprozessoren, von denen mindestens einer ein Leitstandprozessor mit einer Steuertastatur und einem Bildschirmgerät ist, besteht, die mit Meß-, Stell- und/oder Anzeigegliedern der jeweiligen Teilvorrichtungen verbunden sind und diesbezüglich anfallende Daten in der Teilvorrichtung steuernd und/oder regelnd oder zur Anzeige bringend verarbeiten, wobei diese Mikroprozessoren untereinander mit einem Nachrichtenbus über handelsübliche Schnittstellenschaltkreise verbunden sind und über diese gemäß einem Protokoll füreinander relevante aktuelle Betriebsdaten, wie Drehzahlen, Fahrgeschwindigkeit, Zeit usw., zusammen mit einem betriebsdatenspezifischen Identifikator laufend übertragen.

Eine derartige Vorrichtung ist aus der Z: Landtechnik 47, 71 - 74, 1992, Gottschalk - "Fehlerdiagnose" - bekannt. Dabei sind durch einen genormten CAN-Nachrichtenbus mehrere Mikroprozessoren kommunizierend verbunden, die mit Meß- und Stellgliedern von Teilvorrichtungen, nämlich einem Motor, einem Fahrwerk, einem Arbeitsgerät und einer Anzeigevorrichtung sowie mit einem Diagnoseprozessor verbunden sind und die deren Daten zur Steuerung und Regelung der Teilbereichsfunktionen verarbeiten und übergeordnet austauschen und diagnostisch verwenden.

Es ist dabei vorgesehen, daß die einzelnen Teilvorrichtungen jeweils von einer jeweils relevanten anderen Teilvorrichtung bedarfsweise aktuelle Betriebsdaten, wie Drehzahlen, Fahrgeschwindigkeit, Zeit usw., anfordern. Die Datenübertragung erfolgt nach einem Standardprotokoll mittels handelsüblicher Schnittstellenschaltkreise, die auch einen Einleiter-Notbetrieb statt des üblichen Zweileiter-Betriebes erbringen. Diese Art der bedarfsweisen Datenabfrage aus den anderen Teilvorrichtungen erfordert bei komplexen Landmaschinen, insbesondere Mähdreschern, einen umfangreichen Ver- und Entschlüsselungsaufwand der Nachrichten, was zu einer ausgedehnten Warteschlagenbildung und langen Verarbeitungszeiten der Nachrichten in den Prozessoren und u.U. zu unzulässigen Totzeiten der Stell- und Regelvorrichtungen und zu einem Fehlverhalten derselben führen kann.

Weiterhin ist aus der DE 37 08 324 A1 eine mikroprozessorgesteuerte Informationsvorrichtung einer Landmaschine bekannt, die auf einem alphanumerischen 4-Zeilen-Anzeigetableau jeweils vorgegebene und meßtechnisch aktuell ermittelte Bestückungs- und Betriebsdaten darstellt, wobei die angezeigten Begriffe aus einem jeweils angeforderten Sprachschatzspeicher entnommen sind. Eine Vorgabe oder Auswahl von Betriebseinstelldaten und -programmteilen erfolgt dialoggestützt über eine numerische Tastatur und verschiedene Steuertasten. Die Wahrnehmung der Sprachenangaben bedarf im laufenden Betrieb einer erhöhten Konzentration und Aufmerksamkeit des Bedieners, die so der Beobachtung der Maschine und des Fahrweges entzogen wird.

Weiterhin ist aus dem Datenblatt:
Philips, 82C200-Preliminary Functional Description, S. 4 - 7, ein BUS-Schnittstellenbaustein bekannt, der eine Akzeptanzfilterbaugruppe enthält, mit der die Identifikatoren nacheinander verglichen werden, worauf nur die Nachrichten an den angeschlossenen Mikroprozessor weitergeleitet werden, deren Identifikator einem der eingespeicherten entspricht. Die Zeiten für die sukzessiv erfolgenden Vergleiche sind je nach der Identifikatornummer relativ hoch, und zwischenzeitlich eintreffende Nachrichten werden u.U. nicht aufgenommen und gehen verloren, soweit nicht eine übergeordnete Softwareorganisation eine zusätzliche Überwachung und Neuanforderung der Übertragung der gleichen Nachricht veranlaßt. Hierdurch entstehen weitere Zeitverzögerungen, so daß eine Echtzeitkommunikation nur bei einem Austausch einer sehr geringen Anzahl von Nachrichtenarten in praktischen Anwendungen der Landmaschinentechnik damit möglich war.

Es ist Aufgabe der Erfindung, die eingangs bezeichnete Landmaschine, insbesondere deren Leitvorrichtung, in der Kommunikationsleistung zwischen den Prozessoren und zum Bediener hin zu erhöhen bei gleichzeitiger physischer Entlastung des Bedieners.

Die Lösung besteht darin, daß in den einzelnen Mikroprozesoren mittels des jeweils empfangenen Identifikators auf ein Schlüsselmerkerfeld zugegriffen wird, in dem die Schlüsselmerker solcher Betriebsdatenarten, die in dem betreffenden Mikroprozessor zu empfangen sind, abgelegt sind, und immer nur dann, wenn dabei ein Schlüsselmerker dort aufgefunden wird, der betreffende Identifikator sowie die ihm zugehörig übertragenen Betriebsdaten angenommen, gespeichert und verarbeitet werden, und daß in dem Leitstandprozessor gemäß dessen jeweiligen durch eine Bedienung der Steuertastatur und/oder eines Wahlschalters mit zahlreichen Schalterstellungen programmgemäß erreichten Dialogzustand die in dem Leitstandprozessor laufend empfangenen Betriebsdaten jeweils abhängig von deren Identifikator in Analogpiktogramme, Zahlendarstellungen und/oder Textdarstellungen transformiert und jeweils in mindestens einem Bildfeld einer dem jeweiligen Dialogzustand zugeordneten Bildschirmmaske aktualisierend eingestellt und abgespeichert werden und ein so laufend aktualisierter Bildspeicherinhalt auf dem Bildschirmgerät dargestellt wird.

In vorteilhafter Ausgestaltung benötigt die neuartige Art der Akzeptanzfilterung nur einen Speicherzugriff auf das Schlüsselmerkerfeld, das als eine Tabelle angelegt ist, in der die Schlüsselmerker der zugelassenen Indikatoren als Bits abgelegt sind. Ist die Tabelle mit 2048 Bit aus Speicherplatzgründen zweidimensional byteweise aufgebaut, so wird zu einer Identifikatorprüfung eine Adressierung der Tabelle mit acht Bit Adresslänge und ein Zugriff mit drei Bit auf eine Entschlüßlertabelle zur Transformation von drei Bit auf eins-aus-acht sowie eine Vergleichsoperation der beiden Ergebnisse benötigt. Diese drei Operationsschritte werden parallel zum weiteren Nachrichtenempfang ausgeführt, so daß die gepufferte Nachricht, wenn sie für den Mikroprozessor bestimmt ist, nach der Vervollständigung der Nachricht im Empfangspuffer praktisch ohne Zeitverlust, also in Echtzeit, übernommen wird und sofort weiterverarbeitet werden kann.

Hierdurch ist es möglich, auf dem prozessorgesteuerten Bildschirm, eine Instrumentierung mit aktueller Betriebsdatenanzeige zu verwirklichen. Ein besonderer Vorteil ist dabei, daß die dargestellte Instrumentierung der jeweiligen Betriebsart angepaßt wird, wobei jedoch stets eine gleiche Grundstruktur der Bildmaske belassen bleibt, damit der Bediener so wenig wie möglich transformierende Denktätigkeit ausführen muß und eine feste Ortsassoziation vom Bildschirm zu bestimmten Betriebszuständen erhält, die für die Sicherheit dienlich ist.

Durch die hohe Übertragungsleistung ist es auch möglich mit Priorität Alarme und Eilmeldungen an den Bediener zu übermitteln und auf den Bilschirm einzublenden. Nur die aktuelle Information, auf die reagiert werden muß ist im Blickfeld des Bedieners; die Überwachung der einzelnen kritischen Baugruppen erfolgt automatisch und wird nicht zur Anzeige gebracht. Nur die Daten sind anschaulich im Führerhaus auf dem Bildschirm dargestellt, die geländeabhängig und vom Fruchtzustand abhängig vom Bediener zu beeinflussen sind. Dies sind die Fahrgeschwindigkeit, die Fahrtrichtung und damit die Schnittbreite, die Schneidwerkshöhenlage und -neigung. Alle genannten Funktionen werden in Einhandbedienung am Fahrhebel, der mit vier Tasten zur Schneidwerkseinstellung bestückt ist, gesteuert. Die Ausführung der Steuerung geschieht durch Sollwertvorgaben, die laufend an die zuständigen Prozessoren übertragen werden. Zur Vereinfachung der Schneidwerkseinstellung ist ein besonderes Programm vorgesehen, das durch die Fahrhebeltasten die sofortige Auswahl eingespeicherter Sollwerte und unterschiedlicher Regelprogramme ermöglicht aber auch eine Veränderung der Sollwerte bedarfsweise erbringt.

In einer vorteilhaften Ausführung ist es vorgesehen, Sollwertvorgaben außer oder statt über eine Menüvorwahl über eine Wahlschaltereinstellung einzuleiten, wobei entsprechend der Wahlschalterstellung jeweils zugehörig ein entsprechendes Programmteil eine Übertragungsverbindung zu dem jeweils angewählten Aggregat herstellt und ein zugehöriges Piktogramm aussteuert und den jeweils durch Betätigung einer +/-Taste, die vorzugsweise die vorhandene Wipptaste ist, erhöhten bzw. erniedrigten Sollwert zahlenmäßig in einem Balkenbereich zwischen seinem zulässigen Grenzwert darstellt.

Vorzugsweise werden während der direkten Sollwertvorgabe jeweils die Cursorstellung und der Menüzustand des Fahr- und Erntebildes zwischengespeichert und bei einer Rückkehr in den Menübetrieb durch eine entsprechende Einstellung des Wahlschalters wieder aktiviert und angezeigt.

Der Wahlschalter ist vorzugsweise ein Drehschalter, dessen Mittelstellung für den Menübetrieb und dessen weiteren Stellungen für Sollwertvorgaben vorgesehen sind. Diese betreffen die Dreschtrommel-Solldrehzahl, die Gebläse-Solldrehzahl, den Dreschkorb-Sollabstand, die Soll-Empfindlichkeit des Siebverlustsensors, die Soll-Empfindlichkeit eines Schüttlerverlustsensors, die Haspel-Solldrehzahl, die Untersieb-Sollweite, die Obersieb-Sollweite und/oder die Schrägförder-Solldrehzahl.

Der jeweils gewählte Sollwert wird aus dem zugehörigen Sollwertspeicher in dem entsprechenden Mikroprozessor abgefragt und zur Anzeige gebracht und bei Vorgabe eines Anderungsinkrementes im Sollwertspeicher verändert und wieder rückgemeldet. Ebenso wird der durch die darauf erfolgte Einstellung veränderte Istwert laufend zur Anzeige gebracht, so daß eine vollständige Funktioskontrolle vorliegt. Außerdem arbeitet das Überwachungsprogramm ständig, das einen Alarm signalisiert, wenn der Istwert dem Sollwert nicht folgt oder eine Daueransteuerung oder keine Ansteuerung des zugehörigen Stellgliedes erfolgt. Eine Anzeige, Quittierung und Abspeicherung der Alarme geschieht wie in den menügesteuerten Programmteilen.

Vorteilhafte Ausgestaltungen sind in den Unteransprüchen und in der Figurenbeschreibung und in den Figuren im einzelnen dargestellt.
- Fig. 1: zeigt schematisch die Akzeptanzfilterung;
- Fig. 2: zeigt ein Übersichtsschema eines Mähdreschers mit einem Mulitprozessornetzwerk und Ausschnittvergrößerungen in verschiednen Maßstäben;
- Fig. 3: zeigt eine Fahrbildmaske;
- Fig. 4: zeigt eine Erntebildmaske;
- Fig. 5: zeigt eine Einstellmaske;
- Fig. 6: zeigt eine Einstellmaske für Schlupfgrenzwertvorgaben;
- Fig. 7: zeigt ein Bildschirmgerät mit Bedienschaltern.

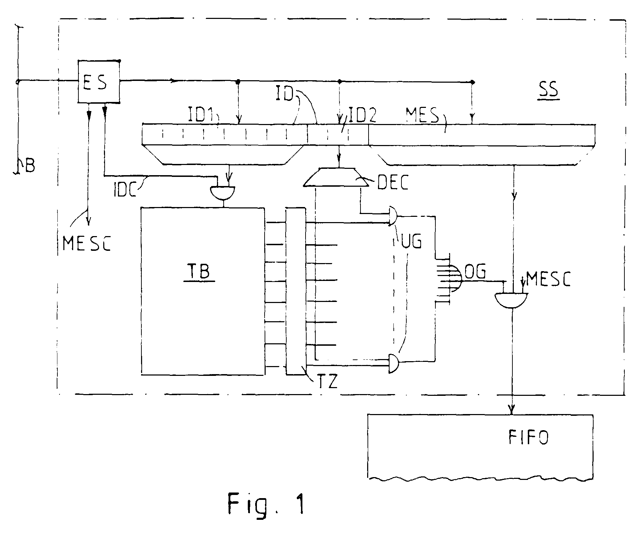

Figur 1 zeigt schematisch die Akzeptanzfilterung der Nachrichten (ID, MES), die von einem der Mikroprozessoren empfangen werden. Von dem Bus (B) wird die Nachricht über einen Empfängerschaltkreis (ES), der die Pegelumsetzung und Synchronisation bewirkt, in einen Pufferspeicher, der aus einem Identifikatorabschnitt, der den Identifikator (ID) aufnimmt, und aus einem Betriebsdatenabschnitt, der die Betriebsdaten (MES) aufnimmt, besteht, seriell eingeschrieben. Wenn der Empfängerschaltkreis (ES) ein Identifikatorkomplettsignal (IDC) abgibt, adressiert der Identifikator (ID) mit einem ersten 11-Bit-Identifikatorabschnitt (ID1) den Identifikatorspeicher (TB), der 256 Byte enthält, so daß an dessen Ausgang ein 1-Byte-Wort ansteht, das einer achtfach UND-Funktion (UG) zugeführt ist, der andererseits zu eins-aus-acht dekodiert, hierzu kann eine Tabelle (DES) dienen, die drei Bit eines zweiten Identifikatorabschnittes (ID2) zugeführt sind und deren Ausgangssignale in einer ODER-Funktion (OG) zusammengefaßt sind, die ausgangsseitig die Weiterleitung des Identifikators (ID) und der Betriebsdatennachricht (MES) in einen Zwischenspeicherbereich (FIFO) des Mikroprozessors (M1) steuert, so bald die Betriebsdatennachricht (MES) komplett empfangen ist, was der Empfängerschaltkreis (ES) mit dem Nachrichtkomplett-Signal (MESC) signalisiert.

Die hardwaremäßig dargestellten Funktionen sind bevorzugt weitgehend programmgemäß in dem Mikroprozessor ausgeführt, wobei die Komplett-Meldungen (IDC, MESC) zur Synchronisation des Betriebes des Pufferspeichers und des Programmes dienen. Der Transfer des Pufferinhaltes erfolgt zweckmäßig wie bei den bekannten Schnittstellenschaltkreisen jeweils byteweise seriell, was i.e. nicht dargestellt ist.

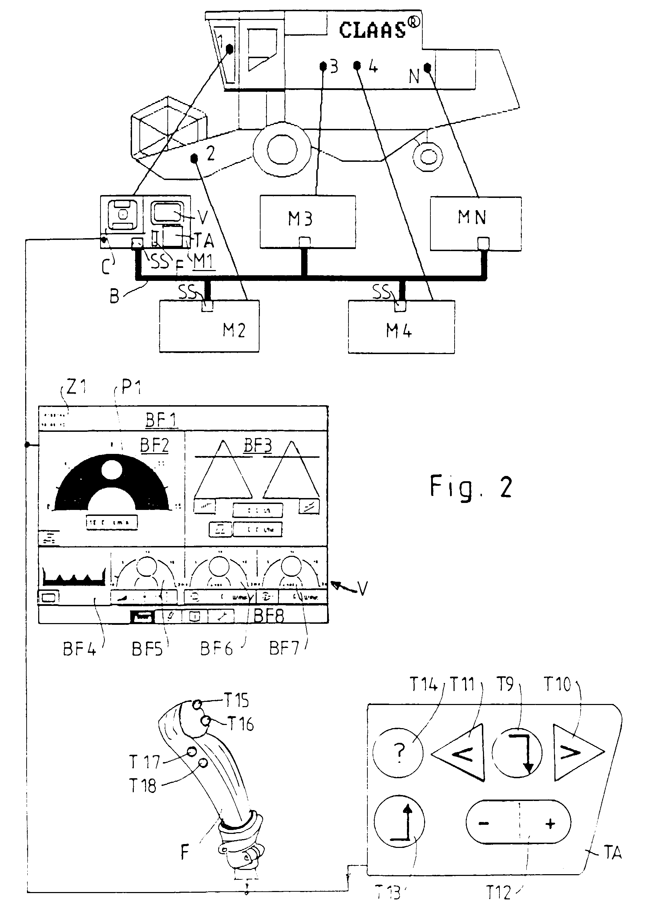

Figur 2 zeigt ein Übersichtsschema über einen Mähdrescher mit einem Mikroprozessornetzwerk mit dem Bus (B). In der Fahrerkanzel (1) ist der Leitstandprozessor (M1) installiert, und am Schneidwerk (2) zur Schneidwerksteuerung und -regelung ein zweiter Mikroprozessor (M2), am Antrieb- und Fahrwerk (3) ein dritter Mikroprozessor (M3) am Dreschwerk (4) ein vierter Mikroprozessor (M4) und am Förder- und Reinigungswerk (N) ein fünfter Mikroprozessor (MN), der die Gutströme überwacht. Jeder Mikroprozessor (M1 - MN) ist über einen Schnittstellenschaltkreis (SS) an den zentralen Nachrichtenbus (B) angeschlossen. Der Leitstandprozessor (M1) steuert das Bildschirmgerät (V) an und wird durch eine Steuertastatur (TA) mit 7 Tasten (T9 - T14) für den Bildschirmdialogbetrieb sowie durch ergonomisch am Fahrhebel (F) angeordnete Schneidwerkstelltasten (T15 - T18) angesteuert.

Die Bildschirm-Anzeigebereiche sind die Uhrzeit- und Datumsanzeige (BF1), die Fahrgeschwindigkeitsanzeige (BF2), die Anzeige der Körnerverlust und Ernteleistung (BF3), die Anzeige der Arbeitsbreite (Teilbreite) (BF4), die Schnitthöhen-Richtwerkskala mit der Anzeige der Schnitthöhen-Sollwerte (BF5), die Dreschtrommeldrehzahl-Anzeige (BF6), die Gebläsedrehzahl-Anzeige (BF7) und die Auswahlleiste der Hauptmenüs (BF8). Die Tastenfunktionen vom Tastenfeld (TA) sind die Bestätigungstaste (T9) zum Öffnen von Menüs, zum Bestätigen von Einstellwerk und zum Starten und Stoppen von Aufträgen, die Cursortaste "Rechts" (T10), die Cursortaste "Links" (T11) zur Auswahl von Menüpunkten; vom ersten Menüpunkt gelangt man mit "Links" zum letzten Punkt und umgekehrt; die +/-Wipptaste (T12) zur Verstellung von Werten, die Rücksprungtaste (T13) in die nächst höhere Menüstufe und die Hilfetaste (T14) zum Aufruf des Erklärungstextes zum aktuellen Menüpunkt. Nochmaliges Drücken dieser Hilfetaste führt zurück zum Menüpunkt. Werden die Tasten länger gedrückt gehalten, so wiederholt sich die Tastenfunktion automatisch mehrmals. Am Fahrhebel (F) sind die Tasten Drucktaster-Schneidwerkheber (T15), Drucktaster-Schneidwerksenken (T16), Drucktaster-Schnitthöhenvorwahl-Automatik-ein (T17) und Drucktaster-Kontur-Automatikein (T18).

Auf dem Bildschirm (V) sind die acht Bildfelder (BF1 - BF8) angeordnet, in denen Piktogramme (P1) zur Analogdarstellung von Betriebsdaten, Zahlenangaben (Z1) zur numerischen Datenausgabe und in anderen Betriebszuständen Textangaben dargestellt werden.

Die Bildbereiche der Uhrzeitanzeige (BF1) und zur Menüauswahlanzeige (BF8) sind immer gleichartig vorhanden, worin die Uhrzeit und das Datum stets von der elektronischen internen Uhrzeit aktualisiert dargestellt werden und die Menüanzeige abhängig von der Tastenbetätigung der Steuertastatur (TA) erfolgt, indem die Hauptmenüanzeigesymbole aktuell massiv und ansonsten transparent dargestellt sind.

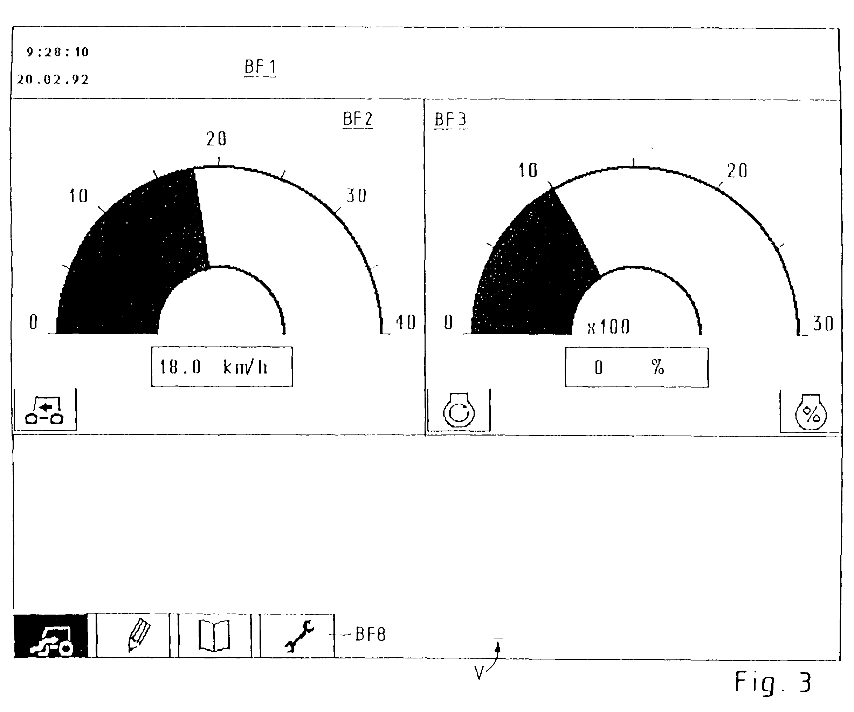

In den anderen Bildfeldern (BF2 - BF7) werden dem jeweiligen Menüpunkt entsprechend verschiedene Betriebsinformationen dargestellt. Ausgangspunkt ist stets das Fahrbild, Figur 3, bei dem im linken großen Bildfeld (BF2) ein Tachometer und im rechten großen Bildfeld (BF3) ein Betriebslastanzeiger dargestellt ist.

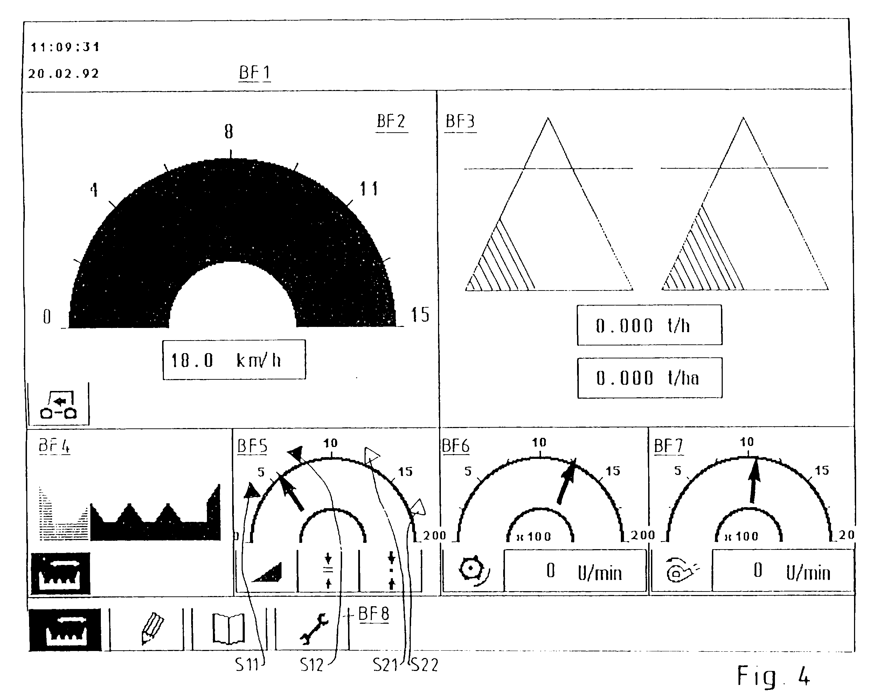

Von diesem Menüpunkt kann mit einer ersten Tastenwahl in ein Erntebild, Figur 4, gewechselt werden, wo wieder links der Tachometer und wo im rechten großen Bildfeld (BF3) in zwei Dreieckpiktogrammen laufend die Körnerverlustrate und die Ernteleistung dargestellt werden. In den kleineren Bildfeldern (BF4 - BF7) darunter sind die jeweilige Arbeitsbreite, die Schnitthöhenvorwahl, die Dreschtrommeldrehzahl, die Gebläsedrehzahl und die Motordrehzahl mit der Motorauslastung veranschaulicht und beziffert.

Vom Fahrbild (Fig. 3) und vom Erntebild (Fig. 4) kommt man durch weitere Tastenbetätigungen hierarchisch in Untermenüs primär wie folgt:

### Hauptmenüs

| Fahrbild | Erntebild |
|---|---|
| - Erntebild | - Teilbreite ein/aus |
| - Einstellen | - Einstellen |
| - Registrieren | - Registrieren |
| - Gebrauchsanleitung | - Gebrauchsanleitung |
| - Service | - Service |

### Untermenüs

| Einstellen | Gebrauchsanleitung |
|---|---|
| - Einstellen Quantimeter | - Grundeinstellung |
| - Einstellen Schneidwerk | - Einstellhilfen |
| - Einstellen Drehzahlwächter | - Probleme und Lösungen |
| - Einstellen Systemdaten | - Systemdaten |
| | |

| Registrieren | Service |
|---|---|
| - Registrieren Maschinendaten | - Maschinen-Service |
| - Registrieren Speicherdaten | - Checkliste |
| - Registrieren Auftragsdaten | - Sicherheitshinweise |

Die Untermenüs sind weiter gegliedert, wie folgende Tabelle für das Einstellen zeigt:

### Einstellen

- Einstellen Systemdaten
   - Einstellen Drehzahlanzeige
   - Einstellen Sprache
   - Einstellen Datum und Uhrzeit
   - Mähdreschertyp auswählen
- Einstellen Bordinformator
   - Schneidwerksbreite
   - Arbeitsstellung
   - Kalibrierfahrt Distanz faktor
   - direkte Einstellung Distanz faktor
   - eigene Einstellung Distanz faktor abspeichern
- Einstellen Drehzahlwächter
   - Einstellen Drehzahlen
   - Einstellen zulässiger Betriebsabfall
   - Einstellen zulässiger Schlupf
- Einstellen Kontur
   - Einstellen Endanschläge
   - Einstellen Verhältnis Taster/Feder
   - Einstellen Anzahl der Sollwerte
   - Einstellen der Sollwerte
- Einstellen Quantimeter
   - Korrekturrechnung Durchsatzfaktor
   - Vorschlagliste Durchsatzfaktor
   - eigene Einstellung Durchsatzfaktor abspeichern.

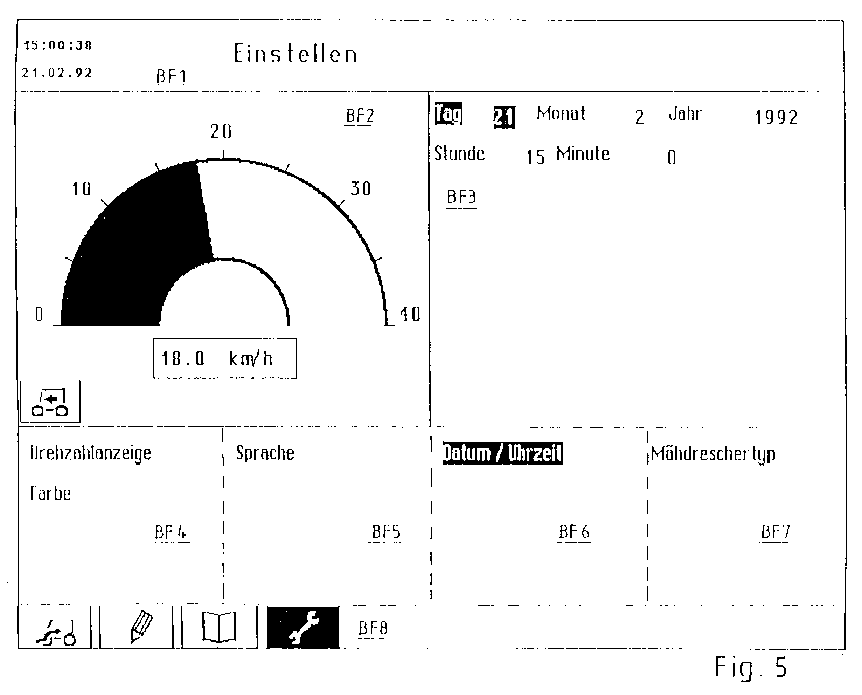

Als Beispiel ist der Bildaufbau im Menüpunkt "Einstellen Systemdaten, Datum Uhrzeit" in Figur 5 gezeigt. Der Menüpunkt ist im Klartext in negativer Schrift im sechsten Bildfeld (BF6) und das gerade eingestellte Datum mit der negativen Klarschriftkennzeichnung "Tag" im dritten Bildfeld (BF3) kenntlich gemacht.

Zu den Darstellungen der normalen Betriebsdaten werden übersteuernd Alarme und wichtige Meldungen in den variabel zuzuordnenden Bildfeldern (BF2 - BF7) dargestellt.

Alarme sind eine Sonderform von Meldungen höherer Priorität. Sie erzeugen ein optisches und akustisches Signal, das vom Bediener quittiert werden muß. Das optische Signal bestehend aus einem Symbol und erklärendem Text und überlagert den bisherigen Bildschirminhalt. Nach einem Quittieren erscheint der Alarm nur noch als Meldung.

Folgende Alarme sind definiert:
- Drehzahlüberwachung; der Schlupf überschreitet einen vorgegebenen Schwellwert an:
   -- Dreschtrommel -- Gebläse -- Schüttler
   -- Schrägförderer -- Überkehr -- Häcksler.
- Alarmmeldung der On-Line Diagnose sind:
   -- Modulhardware defekt -- Modulsensorik defekt
   -- Modulaktorik defekt

Meldungen werden als optisches Symbol im vierten bis siebten Bildfeld (BF4 - BF7) dargestellt. Jedes Meldungssymbol wird an einer festen Position angezeigt. Zusätzlich erfolgt ein kurzer Hupton.

Folgende Meldungen sind definiert:
-- Service erforderlich (10h, 50h, 100h, 500h)
-- Häcksler EIN -- Auto-Kontur Status -- Unterspannung
-- Überspannung.

Um eine schnelle und einfache Prioritätensteuerung der auf dem Nachrichtenbus ausgetauschten Informationen zu erbringen, sind die Identifikatoren mit drei ihrer Bitstellen bestimmten Klassen zugeteilt, wie folgende Tabelle zeigt. Durch einfaches Abprüfen dieser Stellen wird nach der Übernahme einer Nachricht infolge eines positiven Akzeptanzprüfungsergebnisses die Priorität ermittelt und dergemäß die zugehörige Nachricht verwertet oder in eine Warteschlage eingereiht. So ist sichergestellt, daß kritische Alarme sofort gemeldet werden.

| Prioritätsstufen: | bin |
|---|---|
| Systembotschaften | 000 |
| Alarme | 001 |
| Sollwerte | 010 |
| Istwerte | 011 |
| Meldungen | 110 |
| Diagnose | 111 |

In der folgenden Tabelle sind einige Alarmmeldungen zusammengestellt:

| Nachricht | Datenbereich |
|---|---|
| Alarm | |
| - Bordinformator | |
| | Dreschtrommel |
| | Gebläse |
| | Online Diagnose: |
| | (Aktorik/Sensorik) |
| | Schneidwerk EIN (Schalter) |
| | Drehzahländerung (Schalter) |
| | Gebläsedrehzahl |
| | Geschwindigkeit |
| | Motordrehzahl |
| | Drehzahl Dreschtrommel |
| | |
| Alarm | |
| - Drehzahlmesser | |
| | Schüttler |
| | Schrägförderer |
| | Überkehr |
| | Kornelevator |
| | Häcksler |
| | Oneline Diagnose: |
| | (Aktorik/Sensorik) |
| | Drehzahl Schüttler |
| | Drehzahl Schrägförderer |
| | Drehzahl Überkehr |
| | Drehzahl Kornelevator |
| | Drehzahl Häcksler |
| Alarm | |
| - Kontur | |
| | 2 Byte Int. |
| | Oneline Diagnose: |
| | (Aktorik/Sensorik) |
| | Absenkautomat EIN (Taster) |
| | Magnetventil rechts |
| | Magnetventil links |
| | Magnetventil senken |
| | Magnetventil heben |
| | Kontur EIN (Schalter) |
| | Schnitthöhenregler EIN (Tt) |
| | Istwert Lage |
| | Istwert rechts |
| | Istwert links |
| | Istwert Feder |
| | Sollwert Schnitthöhenregler |
| | Sollwert Absenkautomat |
| | Schneidwerk ausgeschaltet. |

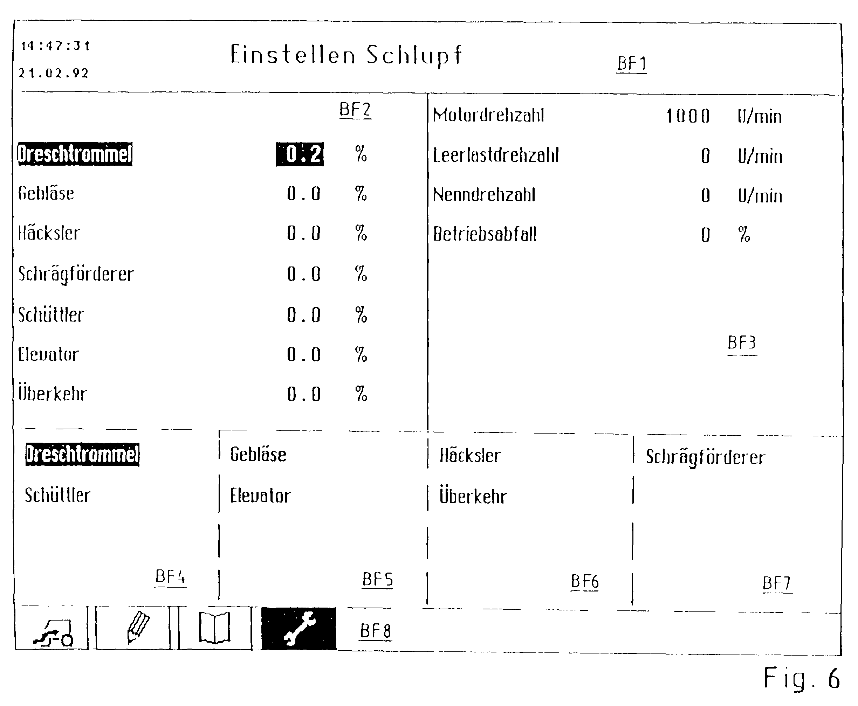

Die Drehzahlüberwachung erfolgt, wenn das Schneidwerk abgesenkt und eingeschaltet ist und eine minimale Arbeitsdrehzahl des Motors erreicht ist. Es wird dann die Drehzahl der einzelnen von Keilriemen angetriebenen Wellen im Verhältnis zur Motordrehzahl relativ zu dem Leerlaufdrehzahlverhältnis ausgewertet und geprüft, ob ein jeweils vorgegebener Schlupf überschritten wird. Im engeren Sinn handelt es sich somit um eine Schlupfüberwachung. Wird der zulässige Schlupf überschritten, so wird der entsprechende Alarm signalisiert und mit höchster Priorität zur Anzeige gebracht. Nach der Quittierung des Alarms durch eine entsprechende Betätigung der Bestätigungstaste (T9) bleibt die Meldung im Bildfeld, jedoch wird die weitere Erzeugung von Alarmmeldungen und eine ständige Überlastung des Nachrichtenweges dadurch verhindert, daß die Schlupftoleranzgrenze inkremental erhöht wird, indem eine entsprechende Inkrement-Stellnachricht an dem zugehörigen Überwachungsprozessor (M4) gegeben und von diesem ausgewertet wird. Außerdem wird eine entsprechende Meldung in einem Wartungsanweisungsspeicher eingetragen, die nach erfolgter Wartung im Wartungsbetriebszustand gelöscht wird, wobei auch der zulässige Schlupf wieder neu vorgegeben wird. Die hierbei auftretende Bildschirmaufteilung ist für den Menüpunkt der Schlupfvorgabe für die Dreschtrommel in Figur 6 dargestellt.

Zur Synchronisation der einzelnen Drehzahlmessungen mit der Motordrehzahl wird letztere periodisch, zweckmäßig jede Sekunde, an die anderen Teilnehmer übertragen.

Weiterhin werden in kurzen Zeitabständen die Fahrgeschwindigkeit und der Ein-auszustand des Schneidwerkes übertragen.

Weiterhin werden vom Leitstandprozessor (M1) periodisch mit dem Antrieb- und Fahrwerkmikroprozessor (M3) folgende Nachrichten ausgetauscht und zwar:
empfangend:
-- Teilbreite 1/1 - 1/4 -- Arbeitsbreite
-- Stat. Radius x Übersetzung
-- Obere Leerlastdrehzahl Motor -- Vollastdrehzahl Motor
-- Min. Arbeitsdrehzahl -- Zulässiger Schlupf gesendet:
-- bearbeitete Fläche -- Flächenleistung -- Wegstrecke
-- Arbeitsstunden -- Betriebsstunden -- Bordnetzspannung
-- Motorauslastung -- Gebläsedrehzahl
-- Dreschtrommeldrehzahl.

Letztere Daten dienen insbes. für die Ernte- und Abrechnungsinformationsausgaben sowie für die Erstellung eines Erntekatasters zur Korrelation der Getreidedurchsatzdaten, die der Förder- und Reinigungsmikroprozessor (MN) ermittelt und periodisch aussendet und zu laufenden und akkumulierten Ausgaben gespeichert.

Eine laufende Kommunikation mit kurzen Reaktionszeiten findet insbes. auch zwischen dem Leitstandmikroprozessor (M1) und dem Schneidwerkreglerprozessor (M2) statt, da die Signale der Kommandotasten (T15 - T18) am Fahrhebel (F) unverzüglich in Steueraktionen zur Höhen- und Neigungseinstellung des Schneidwerk umgesetzt werden müssen, da diese zur optimalen Erfassung unterschiedlich hohen und/oder geneigten oder liegenden Getreides und zur Verhinderung von Beschädigungen des Schneidwerks durch Steine oder Erdhaufen und zur Verhinderung von einer Überlastung des Förderers zur jeweils vorgegebenen Fahrgeschwindigkeit und Schnittbreite stehen, die durch die Längs- bzw. Querneigungseinstellung am Fahrhebel (F) bestimmt werden.

Zur Kommunikation des Schneidwerkprozessors (M2) sind insbes. folgende periodische Nachrichten vorgesehen:
Empfang:
- Geschwindigkeit
- Inkrementieren oder dekrementieren der Schnitthöhe,
- Sollwerte für die beiden Absenkautomaten
- Sollwert für den Schnitthöhenregler
Sendung:
- Istwerte der Absenkautomaten
- Istwerte der rechten und linken Bodentaster
- Konturautomatik ein - aus
- Stellgrößen der Absenkautomaten ein - aus
- Stellgrößen der Schnitthöhenregler ein - aus

Außerdem werden mit Priorität Alarme gesendet, die die Überschreitung von vorgegebenen Istwert-Grenzwerten sowie Störungen an den Stellgliedern, den Magnetventilen der hydraulischen Höhen- und Neigungsverstellvorrichtungen, signalisieren.

Die Istwerte sind gebildet aus dem Auflagedruck (gemessen an der Schneidwerkfeder) und dem Bodenabstand (gemessen über Tastbügel). Damit hat der Fahrer die Möglichkeit, den Auflagedruck und den Bodenabstand des Schneidwerks stufenlos einzustellen.

Damit das Schneidwerk parallel zum Boden geführt wird und die Schnitthöhe über die gesamte Schneidwerkbreite konstant ist, ist neben der Höhenreglung noch eine Querreglung aktiv. Diese Querreglung vergleicht den linken und rechten Bodenabstand und gibt bei Abweichungen Korrektursignale an die Hydraulik.

Mit der Absenkautomatik hat der Fahrer die Möglichkeit, eine Schneidwerkhöhe von z. B. über 100 mm vorzuwählen. Die vorgewählte Höhe wird automatisch eingestellt. Der Fahrer kann während der Fahrt zwischen dem Absenkautomatikprogramm und dem Schnitthöhenreglerprogramm umschalten und so auf Tastendruck verschiedene Schneidwerkhöhen anfahren. Diese Funktionsumschaltungen werden hauptsächlich über die Taster am Multifunktionsgriff (F) des Fahrhebels gesteuert. Der obere Taster (T17) dient zum Ausheben des Schneidwerks aus dem bodennahen Kontur-Automatikstellbereich heraus in den bodenferneren Schnitthöhenbereich. Der untere Taster (T18) dient zum Absenken des Schneidwerks in die Kontur-Automatikstellung, die entweder im Bereich einer vorgegebenen Schnitthöhenvorwahl als auch einer vorgegebenen Schnitthöhenregelung liegen kann. Dies entscheidet sich erst bei der Übernahme eines jeweils zugehörigen Sollwertes.

Es sind zwei Arten von Sollwert-Eingaben vorgesehen. Bei der ersten Methode kann der Sollwert durch die +/- Tasten (T12) der Tastatur (TA) verändert werden. Diese Sollwertänderung ist im Arbeitsmenü einstellbar. Das System unterstützt die Eingabe dadurch, daß der Cursor jeweils entsprechend der Automatik steht, die mit der Taste am Multifunktionsgriff (F) vom Fahrer vorgewählt wurde. Der Sollwert wird inkremental um kleine Schrittweiten (2,5%) verstellt. Die Ausführzeit liegt unter einer Sekunde. Das Terminal sendet dazu die Nachricht "Increment" oder "Decrement" an den Schneidwerkmikroprozessor (M2), welcher wiederum mit dem neuen Sollwert antwortet. So wird die Berechnung des neuen Sollwertes zentral an einer Stelle durchgeführt. Eine Voreinstellung der Sollwerte (S11, S12; S21, S22), Fig. 4, ist außerdem im Untermenü Einstellen Kontur möglich.

Die zweite Methode ermöglicht dem Fahrer, den aktuellen Istwert als neuen Sollwert zu übernehmen. Dazu wird das Schneidwerk über die Tasten (T15, T16) für Heben und Senken in die gewünschte Position gebracht und dann durch langes Drücken (über 3 Sekunden) der entsprechenden Automatiktaste (T17, T18) der Istwert als neuer Sollwert übernommen. Eine kurze Betätigung des Schalters senkt hingegen das Schneidwerk in die durch den anderen Sollwert bestimmte Automatikstellung, und der eingestellte Sollwert wird dabei nicht verändert. Die Entscheidung, ob mit dem alten Sollwert anschließend weitergefahren werden soll oder der Istwert als neuer Sollwert übernommen werden soll, wird jeweils erst nach dem Loslassen des Schalters gefällt.

Es ist dem Bediener die Möglichkeit geboten, zwei Sollwerte (S11 - S22), Fig. 4, Bildfeld (BF5) für jede der beiden Regelbereiche vorzuhalten. Über das Menü Einstellen-Kontur kann der Fahrer auswählen, ob er mit einem oder zwei Sollwerten arbeiten will. Sind zwei Sollwerte eingespeichert, so kann durch Tastendruck zwischen diesen gewechselt werden. Dies ist vorteilhaft, wenn das Getreide teils steht und teils liegt oder stark geneigt ist. Die Einstellung mit jeweils einem Sollwert (S11, S21) liegt beim Einschalten des Systems vor. Werden zwei Sollwerte angewählt, dann werden auch die zwei Sollwerte (S11, S12; S21, S22) angezeigt, die zu Beginn um eine Standarddifferenz auseinanderliegen.

Bei der Betätigung einer der Automatiktasten (T15 - T18) wird zwischen den verschiedenen Sollwerten umgeschaltet. War die entsprechende Automatik ausgeschaltet, wird der alte Sollwert als erster Ausgangswert genommen. Beim massivem Bodenkontakt der Schneidwerksvorrichtung, wobei einer der Tastbügel zu mindestens 85% durchgedrückt ist, erfolgt ein automatisches Notheben, d.h. eine Übersteuerung der gespeicherten Sollwerte, und ein Alarm wird ausgesendet.

Wie beim Schnitthöhenregler arbeitet der sogen. Konturregler als Querneigungsregler mit entsprechenden Sollwerten und Bodenkontaktfühlmelder, so daß in Bodennähe eine parallele Führung des Schneidwerks gewährleistet bleibt. Die Querreglung ist praktisch immer aktiv geschaltet. Ihre Regelgenauigkeit (Totzone) beträgt bei kleinen Schneidwerktaster-Durchdrückungen, bei denen der Istwert im oberen Drittel liegt, 6% und bei großen Durchdrückungen 15%. Ist die Abweichung Soll-Ist größer als 20%, so werden die entsprechenden Magnetventile mit 100% ED eingeschaltet. Ist die Abweichung Soll-Ist kleiner als 20% und größer als 5%, so werden die entsprechenden Magnetventile etwa im Sekundenrhythmus mit 10% ED gepulst. Bei einer Abweichung kleiner als 5% werden die Magnetventile abgeschaltet. Zur Erhöhung der Empfindlichkeit der Sollwertvorwahl wird unmittelbar nach einer Sollwertverstellung schon bei einer Soll-Ist-Abweichung von 2,5% das entsprechende Magnetventil ausgleichend betätigt.

So wie für die Schneidwerkregelung Standardeinstellwerte, d.h. Soll- und Grenzwerte, vorgegeben sind, von denen aus der Bediener eine Änderung bei von der Norm abweichenden äußeren Betreibsbedingungen vorgeben kann, so ist dies auch für die anderen Teilaggregate des Mähdreschers der Fall. Für die Ertragsmessung und Verlustmessung und die zugehörigen Berechnungen sind für die einzelnen Getreidearten jeweils Standardwerte der Litergewichte bei einer Durchschnittsqualität und Durchschnittsfeuchtigkeit eingespeichert, weshalb nach dem Einschalten menügeführt die jeweilige Getreideart auszuwählen ist. Es können darüberhinaus in Zeitabständen extern ermittelte Litergewichtsangaben eingegeben werden, falls keine Wägeautomatik vorhanden ist. Die Angaben werden in den Ertrag- und Verlustmeß-mikroprozessor (MN) übertragen und zur Auswertung der Meßdaten dort verwendet, worauf die Ergebnisse laufend an den Leitstandmikroproßessor (M1) übertragen werden und dort zur laufenden Ausgabe in dem Erntebild in die Piktogramme des Bildfeldes (BF3) eingetragen werden und zur Auswertung und späteren Ausgabe auf einem Drucker oder einer Kassette (C) zwischengespeichert werden. Auch die Körnerverlustmeßvorrichtung benötigt zur Korrelation der gemessenen Signale die Angabe der Getreideart, der jeweils charakteristische Werte zugeordnet gespeichert gehalten sind.

Tritt ein Verlustwert auf, der trotz der regelungsbedingten Optimierungen einen vorgegebenen Grenzwert überschreitet, wird eine Alarmmeldung gegeben. Durch die unübersehbare, sehr anschauliche Darstellung der Schüttlerverluste im linken Dreieck und der Siebverluste im rechten Dreieck des Bildfeldes (BF3) der Erntebildmaske, Fig. 4, hat der Bediener ständig diese wichtigen Bedienkriterien im Blickfeld, so daß er eine weitere Optimierung durch jeweils geeignete Schnittbreitenwahl, Fahrgeschwindigkeitseinstellung, Schnitthöheneinstellung und evtl. Sieb- und Gebläseverstellungen laufend vornehmen kann.

Die ergonomische Anordnung des Fahrhebels (F) im Griffbereich der rechten Hand und die der Tastatur (TA) vor der rechten Hand erlaubt auch im laufenden Betrieb einen leichten Zugriff auf die gespeicherten Informationen und die Neuvorgabe von Betriebssollwerten.

Die Verarbeitung der eingehenden Nachrichten im Leitstandprozessor (M1) in die einzelnen Bildfelder geschieht in zwei verschiedenen Programmebenen. Eine einlaufende Nachricht wird zuerst in einer interruptgesteuerten Hintergrundprogrammebene wie folgt behandelt.
- Liegt identifikatorgemäß ein Alarm vor, wird die zugehörige Nachricht aus dem Puffer übernommen und ein Alarmmerker gesetzt und die Nachrichtenzuordnung zu dem zugehörigen Alarmbildfeld (BF3) getroffen und in einem Bildfeldkontrollspeicher vermerkt, die Hupe eingeschaltet sowie der Identifikator gelöscht.
- Liegt kein Alarm sondern eine Meldung vor, so wird die der Nachricht entsprechende Meldung in einem Kontrollfeld des Meldungsbildfeldbereichs (BF4) vorgemerkt und ein Kurzhupen initialisiert sowie der Identifikator gelöscht.
- Liegt weder ein Alarm noch eine Meldung vor und ist ein neuer Anzeigewert übergeben worden, so wird die Anzeigevariable in den dem jeweiligen Anzeigewert zugehörige Bildfeldkontrollspeicher eingetragen sowie der Identifikator gelöscht.

Die Weiterverarbeitung der Bildfeldkontrollspeicherinformationen erfolgt periodisch in einem Hintergrunddienstprogramm. In diesem werden die einzelnen Bildbereichinhalte abhängig von den Status informationen in den Bildfeldkontrollspeichern in einem Bildspeicher zusammengestellt und/oder aktualisiert.
- Liegt ein Wechsel zum Status Dreschwerk-ein vor, wird das Erntebild, Fig. 4, aufbereitet, liegt der neue Status Dreschwerk-aus vor, so wird das Fahrbild, Fig. 3, aufgebaut.
- Ist ein Zustand der Bedientasten (T11 - T18) geändert, so wird dementsprechend der Menüstatusspeicher aktualisiert, und die zugehörigen Bildfeldstatusspeicher werden mit entsprechende Eintragungen versehen bzw. gelöscht.
- Ist ein Alarm durch eine Tastenbetätigung bestätigt worden, so wird der Alarmstatus des Alarmbildfeldes (BF3) im zugehörigen Bildfeldstatusbereich gelöscht und die Hupe ausgeschaltet.
- Danach werden die in den einzelnen Bildfeldstatusspeichern enthaltenen neuen Eintragungen hierarchisch übersteuernd bezogen auf Alarmeintragungen, Meldungseintragungen und allgemeine Betriebs informationen, wie neue Ist- und Sollwerte und Menüstatusänderungen, zur Steuerung der Änderung der Bildspeicherinhalte ausgewertet, so daß der Bildinhalt vollständig aktualisiert ist.

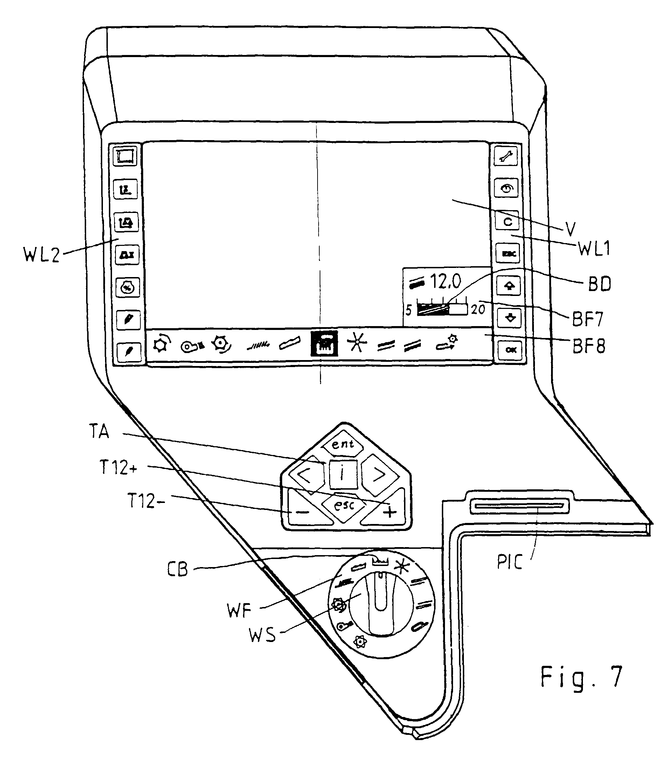

Figur 7 zeigt ein Bildschirmgerät (V) mit einer Piktorgrammleiste, die vorzugsweise im unteren Bildfeldbereich (BF8) angelegt und angesteuert wird, wenn der Wahlschalter (WS), der als ein Drehschalter neben der Tastatur (TA) angeordnet ist, in einer Sollwertvorgabestellung verbracht ist. Die Mittenstellung (CB) des Wahlschalters (WS) ist für die Wahl des normalen Fahrbild- oder Erntebildbetriebes mit der Menüwahl. Die einzelnen Piktogramme betreffen die Auswahl von einzustellenden Sollwertvorgaben: die Dreschtrommel-Solldrehzahl, die Gebläse-Solldrehzahl, den Dreschkorb-Sollabstand, die Soll-Empfindlichkeit jedes Siebverlustsensors, die Soll-Empfindlichkeit eines Schüttlerverlustsensors, die Haspel-Solldrehzahl, die Untersieb-Sollweite, die Obersieb-Sollweite und/oder die Schrägförder-Solldrehzahl sind. Die Symbole befinden sich auch am Wahlschalter (WS) als Wahlfeld (WF). Die Drehzahl-Sollwerte wirken auf die Stellmittel der Variogetriebe der Keilriementriebe. Die Siebweiten-Sollwerte wirken auf die Siebweitenstellmittel. Die Empfindlichkeitssollwerte wirken auf die Verstärkungsgrade und/oder Schwellenvorgaben der Meßverstärker der Verlustsensoren ein.

Der jeweils von dem angesprochenen Stellmittel rückgemeldete Istwert oder der im angewählten Sollwertspeicher enthaltene Sollwert wird in einem weiteren Teilbildfeld (BF7) numerisch angezeigt, sowie als ein Balkendiagramm (BD) zwischen den beiden Grenzen der Sollwerte dargestellt. Die Grenzwerte sind außerdem an den Balkenfeldenden angegeben, und das Balkenfeld (BD) weist eine Skalierung auf.

Im dem Teilbildfeld (BF7) ist außerdem das Symbol des angesteuerten Stellgliedes dargestellt; hier im Bild für einen Fall, in dem die Untersiebweite ausgewählt wäre. Es ist vorgesehen, daß im Falle einer Übersteuerung des Stellmittels das zugehörige Piktogramm negativ ausgebildet wird.

In diesem Zusammenhang auftretende Alarmmeldungen werden wie im Menübetrieb behandelt und zur Darstellung gebracht.

Die Verwendung des Wahlschalters (WS) gibt dem Bediener, der mit einer Menüsteuerung nicht vertraut ist, die einfache Möglichkeit, ganz ähnlich wie an einem hergebrachten Mähdrescher die Sollwertvorgaben und Istwertbeurteilungen und damit die Funktionsbeeinflussung und -überwachung vornehmen zu können.

In einer weiteren Ausführung der Bedienvorrichtung ist die Tastatur (TA) nur mit den beiden Wipptasten (T12+, T12-) bestückt, und zur Menüwahl sind zwei Wahlleisten (WL1, WL2) mit Wahltasten vorgesehen, die mit Piktogrammen für die Hauptmenüwahl und das Weiter- und Umschalten versehen sind. Vorzugsweise sind die beiden Wahlleisten (WL1, WL2) beidseitig des Bildschirmes angeordnet. Statt eines Drehschalters als Wahlschalter (WS) kann auch eine Tastenleiste parallel zum Piktogrammfeld (BF8) vorgesehen werden.

Als Sicherungsvorrichtung ist eine Eingabevorrichtung für eine Personenidentificationskarte (PIC) an der Bedienvorrichtung angeordnet.

## Patentansprüche

1. Landmaschine, insbesondere Mähdrescher, die aus Teilvorrichtungen (1 - N) mit zugeordneten Mikroprozessoren (M1 - NM), von denen mindestens einer ein Leitstandprozessor (M1) mit einer Steuertastatur (TA) und einem Bildschirmgerät (V) ist, besteht, die mit Meß-, Stell- und/oder Anzeigegliedern (V) der jeweiligen Teilvorrichtungen (1 - N) verbunden sind und diesbezüglich anfallende Daten in der Teilvorrichtung (1 - N) steuernd und/oder regelnd oder zur Anzeige bringend verarbeiten, wobei diese Mikroprozessoren (M1 - MN) untereinander mit einem Nachrichtenbus (B) über handelsübliche Schnittstellenschaltkreise (SS) verbunden sind und über diese gemäß einem Protokoll füreinander relevante aktuelle Betriebsdaten (MES), wie Drehzahlen, Fahrgeschwindigkeit, Zeit usw., zusammen mit einem betriebsdatenspezifischen Identifikator (ID) laufend übertragen,
dadurch gekennzeichnet, daß in den einzelnen Mikroprozesoren (M1 - MN) mittels des jeweils empfangenen Identifikators (ID) auf ein Schlüsselmerkerfeld (TB) zugegriffen wird, in dem die Schlüsselmerker solcher Betriebsdatenarten, die in dem betreffenden Mikroprozessor (M1 - MN) zu empfangen sind, abgelegt sind, und immer nur dann, wenn dabei ein Schlüsselmerker dort aufgefunden wird, der betreffende Identifikator (ID) sowie die ihm zugehörig übertragenen Betriebsdaten (MES) angenommen, gespeichert und verarbeitet werden, und daß in dem Leitstandprozessor (M1) gemäß dessen jeweiligen durch eine Bedienung der Steuertastatur (TA) und/oder eines Wahlschalters (WS) mit zahlreichen Schalterstellungen programmgemäß erreichten Dialogzustand die in dem Leitstandprozessor (M1) laufend empfangenen Betriebsdaten (MES) jeweils abhängig von deren Identifikator (ID) in Analogpiktogramme (P1), Zahlendarstellungen (Z1) und/oder Textdarstellungen (TD) transformiert und jeweils in mindestens einem Bildfeld (BF1 - BF8) einer dem jeweiligen Dialogzustand zugeordneten Bildschirmmaske aktualisierend eingestellt und abgespeichert werden und ein so laufend aktualisierter Bildspeicherinhalt auf dem Bildschirmgerät (V) dargestellt wird.

2. Landmaschine nach Anspruch 1, dadurch gekennzeichnet, daß das Schlüsselmerkerfeld eine zweidimensionale Tabelle (TB) ist, in der die Schlüsselmerker zu empfangender Betriebsdatenarten als eine Eins gespeichert sind, und die Tabelle (TB) jeweils mit einem ersten Identifikatorabschnitt (ID1) eines empfangenen Identifikators (ID) zeilenmäßig adressiert und ausgelesen wird und der restliche zweite Identifikatorabschnitt (ID2) binär entschlüsselt mit dem ausgelesenen Tabellenzeileninhalt (TZ) stellengerecht bitweise UND-verknüpft wird und dann, wenn eine Koinzidenz festgestellt worden ist, der Identifikator (ID) sowie die ihm zugehörig übertragenen Betriebsdaten (MES) angenommen gespeichert und verarbeitet werden.

3. Landmaschine nach Anspruch 1 oder 2, dadurch gekennzeichnet, daß der erste Identifikatorabschnitt (ID1) acht Bit lang ist und der zweite Identifikatorabschnitt (ID2) drei Bit aufweist und demgemäß die Tabelle (TB) 256 adressierbare Worte zu 8 Bit enthält, worin die einzelnen mit einer Eins besetzten Bitstellen jeweils einen der Betriebsschlüsselmerker einer relevanten zu empfangenden Betriebsnachrichtenart darstellen.

4. Landmaschine nach einem der vorstehenden Ansprüche, dadurch gekennzeichnet, daß der Identifikator (ID) einen Abschnitt aus 3 Bit enthält, dessen binäre Wertigkeiten verschiedenen Verarbeitungsprioritäten der zugehörigen Nachrichten (MES), wie Alarme, Meldungen oder Allgemeinnachrichten, wie Meß-, Ist- und Sollwerte, zugeordnet sind und als Programmsteuerungskennzeichen einer Prioritätenbehandlung dienen.

5. Landmaschine nach einem der vorstehenden Ansprüche, dadurch gekennzeichnet, daß der Leitstandprozessor (M1) das Bildschirmgerät (V) über einen Bildspeicher ansteuert, dessen Bildschirminhalt in Bildschirmbereiche (TB1 - TB8) aufgeteilt sind, die durch die Tastatur (TA) menügesteuert mit ausgewählten Betriebsdaten (MES) als Piktogramme (P1) Zahlenangaben (Z1) oder Textangaben aufbereitet periodisch geladen werden.

6. Landmaschine nach Anspruch 5, dadurch gekennzeichnet, daß acht Bildschirmbereiche (TB1 - TB8) gegeben sind, von den der erste ständig aktuell die Uhrzeit und das Datum zeigt, der achte eine Hauptmenüleiste aus Piktogrammen enthält, dessen aktiviertes Hauptmenüpiktogramm jeweils massiv ausgebildet ist, der zweite und der dritte die größten Bildschirmbereiche (TB2, TB3) sind und in einem Fahrzustand und in einem Erntezustand, bei eingeschaltetem Dreschwerk, der eine davon stets eine Fahrgeschwindigkeitsanzeige als Piktogramm (P1) und numerisch enthält und der andere im Fahrzustand die Motorauslastung als Piktogramm und numerisch enthält und im Erntezustand jeweils gewöhnlich ein Schüttlerverlustanzeigepiktogramm und ein Siebverlustpiktorgramm zeigt und dabei die übrigen kleineren Bildfelder (BF4 - BF7) Schneidwerk- und Mähdrescherbetriebsdaten enthalten.

7. Landmaschine nach Anspruch 6, dadurch gekennzeichnet, daß in den vier kleineren Bildfeldern (BF4 - BF7) jeweils eine gewählte Arbeitsbreite balkenmäßig symbolisiert dargestellt ist, die aktuelle Schnitthöhe mit bis zu vier wählbaren, aktuell eingestellten Sollwerten (S11 - S22) der Schnitthöhe an einer Halbkreis skala dargestellt sind und eine vorgegebenen und aktuelle Dreschtrommeldrehzahl und eine vorgegebene und aktuelle Gebläsedrehzahl dargestellt sind.

8. Landmaschine nach einem der vorstehenden Ansprüche, dadurch gekennzeichnet, daß immer dann, wenn der Leitstandprozessor (M1) einen Alarmindikator empfangen hat, ein der Art der Alarmnachricht entsprechender Bild-, Zahlen- und/oder Texteil in einen zugeordneten der Bildbereiche (BF3 - BF7) übersteuernd eingetragen wird, der Alarmindikator gelöscht wird und ein akustisches Alarmsignal eingeschaltet wird, bis eine Quittungstaste betätigt wird, worauf ein Meldungsindikator gesetzt wird und die Alarmnachricht aus dem Bildbereich entfernt wird.

9. Landmaschine nach Anspruch 8, dadurch gekennzeichnet, daß immer dann, wenn kein Alarm vorliegt aber ein Meldungsindikator einer vorrangigen Meldung im Leitstandprozessor (M1) durch einen Nachrichtenenmpfang oder nach einer Alarmlöschung vorliegt, ein der Art der Meldung entsprechender Bild-, Zahlen- und/oder Textteil in einem zugeordneten der Bildbereiche (BF3 - BF7) übersteuernd eingetragen wird, der Meldungsindikator gelöscht wird und ein akustisches Kurzzeitsignal ausgegeben wird.

10. Landmaschin nach Anspruch 9, dadurch gekennzeichnet, daß immer dann, wenn weder ein Alarm- noch ein Meldungsindikator jedoch eine Allgemeinnachricht vorliegt, die den jeweils eingetragenen Piktogrammarten oder Zahlenangaben zuzuordnen ist, der Nachrichteninhalt dort aktualisierend eingetragen wird.

11. Landmaschine nach einem der vorstehenden Ansprüche, dadurch gekennzeichnet, daß die Tastatur (TA) zur Menüsteuerung aus sieben Tastern (T9 - T14) besteht, die eine Betätigungstaste (T9) zwei Cursortasten (T10, T11), eine Hilfstaste (T14), eine Rücksprungtaste (T13) und eine Wipptaste (T12) zum Erhöhen und Erniedrigen von jeweils menügemäß ausgewählten Werten sind, und den Tastenbetätigungen dieser Tasten (T9 - T14) gemäß die Bildinhalte der Bildfelder (BF1 - BF8) programmgemäß aufgebaut werden und die dort dargestellten Werte als Betriebsdaten gespeichert und an die anderen Mikroprozessoren (M2 - MN) mit entsprechenden Indikatoren versehen ausgesendet werden.

12. Landmaschine nach einem der vorstehenden Ansprüche, dadurch gekennzeichnet, daß vier weitere Bedienungstasten (T15 - T18) griffgünstig für verschiedene Finger am Griff eines Fahrhebels (F), der entsprechend seiner jeweiligen Neigung der Geschwindigkeitssteuerung und Lenkung des Mähdreschers dient, angeordnet sind.

13. Landmaschine nach Anspruch 12, dadurch gekennzeichnet, daß der Fahrhebel (F) in einem Greifbereich einer rechten Fahrerhand und die Tastatur (TA) im Greifbereich einer rechten Fahrerhand seitlich von und/oder unter dem Bildschirm (V) anschließend an diesen griffgünstig angeordnet sind.

14. Landmaschine nach Anspruch 11, dadurch gekennzeichnet, daß die weiteren Bedienungstasten (T15 - T18) jeweils zum Heben des Schneidwerk, zum Senken des Schneidwerks zu einer Schnitthöhenwahl und zu einer Konturautomatikwahl dienen, indem deren Betätigungssignale jeweils derart ausgewertet werden, daß bei einer kurzen Betätigung dieser Tasten (T15 - T18) ein diesen jeweils zugeordnet gespeicherter hoher oder niedriger Sollwert einer Schneidwerkhöheneinstellvorrichtung vorgegeben wird und bei einer Betätigung der Schnitthöhenwahltaste (T17) oder der Konturautomatikwahltaste (T18) ein dieser zugehöriger Sollwert vorgegeben und eine Neigungsregelautomatik aus- oder eingeschaltet wird, indem entsprechende Nachrichten an einen Schneidwerksmikroprozessor (M2) übertragen werden, der entsprechende Regelprogramme und Schneidwerks-, -sensor- und -stellmittel umfaßt.

15. Landmaschine nach Anspruch 14, dadurch gekennzeichnet, daß dann, wenn die Betätigung der weitren Bedientaste (T15 - T18) länger als eine vorgegebene Mindestzeit gedauert hat, der jeweils im Schneidwerksmikroprozessor (M2) aktivierte Sollwert durch entsprechende Nachrichten laufend tastengemäß inkrementiert oder dekrementiert wird und demgemäß eine Schneidwerkshöheneinstellung erfolgt und laufend der Istzustand ermittelt und zum Leitstandprozessor (M1) zurückübertragen und dort auf den Bildschirm gebracht wird und beim Loslasen dieser Taste als neuer Sollwert übernommen wird.

16. Landmaschine nach einem der vorstehenden Ansprüche, dadurch gekennzeichnet, daß am Leitstandprozessor (M1) der Wahlschalter (WS) eingangsseitig angeschlossen ist und periodisch programmgesteuert seine jeweilige Schalterstellung vom Leitstandprozessor (M1) übernommen wird und von ihm den einzelnen Schalterstellungen zugeordnet Steuerprogrammteile angesteuert werden, wobei er in einer der Drehschalterstellungen (CB) den Menübetrieb im Ernte- oder Fahrzustand bereitstellt und in den anderen Wahlschalterstellungen jeweils einen Einstellzustand für den Sollwert eines zugehörig einstellbaren Aggregates herstellt, der jeweils mittels alternativer Betätigungen einer Wipptaste (T12) herauf- bzw. herabgesetzt wird, wobei eine Sollwertanzeige in einem der Bildfelder (BF7) übersteuernd erfolgt und wobei gegebenenfalls auf einer die verschiedenen Schalterstellungen repräsentierenden Piktogrammleiste in einem der Bildfelder (BF8) auf dem Bildschirmgerät (V) die Schalterstellung in einem Piktogrammfeld visualisiert wird.

17. Landmaschine nach Anspruch 16, dadurch gekennzeichnet, daß infolge jeder Sollwertveränderung eine Funktionsüberwachung der zugehörigen Stellmittel erfolgt und eine Übersteuerung oder ein Ausfall oder Kurzschluß derselben eine Alarmmeldung auf einem zugeordneten Bildfeld auslöst und abgespeichert wird.

18. Landmaschine nach Anspruch 16 oder 17, dadurch gekennzeichnet, daß in dem Einstellzustand im zugehörigen Bildfeld (BF7) der jeweils eingestellte Sollwert in einem Balkendagramm (BD) symbolisiert und zahlenmäßig dargestellt wird, das insgesamt den Bereich zwischen den jeweils zulässigen oberen und unteren Grenzwerten des Sollwertes umfaßt.

19. Landmaschine nach Anspruch 18, dadurch gekennzeichnet, daß in dem Einstellzustand in den zugehörigen Bildfeld ein jeweils dem sollwertmäßig einzustellenden Stellglied zugeordnetes Piktogramm eingetragen ist, das bei Vorliegen einer Übersteuerung in normaler Darstellung und ansonsten in invertierter Darstellung dargestellt ist.

20. Landmaschine nach einem der Ansprüche 16 bis 19, dadurch gekennzeichnet, daß die jeweilige Cursorstellung im Ernte- oder Fahrzustand bei einem Übergang in einem der Einstellzustände gespeichert erhalten bleibt und bei einer Rückkehr in den Ernte- oder Fahrzustand die Cursorstellung wiederhergestellt, angezeigt und ausgewertet wird.

21. Landmaschine nach einem der Ansprüche 16 bis 20, dadurch gekennzeichnet, daß die mit dem Wahlschalter (WS) einzustellenden Sollzustandsvorgaben, die die Dreschtrommel-Solldrehzahl, die Gebläse-Solldrehzahl, der Dreschkorb-Sollabstand, die Soll-Empfindlichkeit jedes Siebverlustsensors die Soll-Empfindlichkeit eines Schüttlerverlustsensors, die Haspel-Solldrehzahl, die Untersieb-Sollweite, die Obersieb-Sollweite und/oder die Schrägförder-Solldrehzahl sind.

22. Landmaschine nach einem der vorstehenden Ansprüche, dadurch gekennzeichnet, daß der Drehzahlwächtermikroprozessor (M3) die Motordrehzahl sowie die Drehzahlen an den keilriemengetriebenen Aggregaten, Dreschtrommel, Gebläse, Häcksler, Schrägförderer, Schüttler, Elevator und überkehr, laufend von zugehörigen Sensoren empfängt und deren Drehzahlverhältnisse zur Motordrehzahl mit getriebemäßig bestimmten, menügesteuert gelernten Drehzahlverhältnissen vergleicht und bei Überschreitung jeweils einer vorgegebenen Schlupftoleranzgrenze einen Alarm an den Leitstandprozessor (M1) zur Ausgabe überträgt, der nach einer Quittierung des Alarmes eine Nachricht zur Erhöhung der Schlupftoleranzgrenze an den Drehzahlwächter-Mikroprozessor (M3) aussendet und eine entsprechende Wartungsmeldung speichert, die später menügesteuert ausgegeben wird.

23. Landmaschine nach einem der vorstehenden Ansprüche, dadurch gekennzeichnet, daß an den Ertrags- und Verlustmeß-Mikroprozessor (MN) menügesteuert vom Leitstandprozessor (M1) Eich-, Vergleichs- und Grenzwerte übertragen werden, die zugeordnet zu den verschiedenen Getreidearten für Normbedingungen vorgehalten sind und vom Bediener bedarfsweise menügesteuert zur Anzeige zu bringen sind und dann änderbar oder neu vorgebbar sind und diese übertragenen Werte zur Auswertung der Verlust- und Ernteleistungsmesswerte genutzt werden und die Ergebnisse an den Leitstandprozessor (Ml) übertragen werden, wo diese in das Erntebild Bildfeld (BF3) bildlich aufbereitet eigetragen werden und zur späteren Ausgabe auf einem Datenträger (C) oder Druckwerk, insbesondere als ein Erntkataster, gespeichert werden.

## Claims

1. An agricultural machine, in particular a combine harvester and thresher, which is comprised of component devices (1 - N) with associated microprocessors (M1 - MN), of which at least one is a control station processor (M1) with a control keypad (TA) and a screen (V), which microprocessors are connected to measurement, actuation, and/or display members (V) of the respective component devices (1 - N) and regarding this, process data which comes up in the component device (1 - N) in a controlling and/or regulating manner, or in a manner which displays it, wherein these microprocessors (M1 - MN) are connected syndetically to a communications bus (B) via conventional interface circuits (SS) and via these circuits, continuously transmit according to a protocol actual operating data (MES), which is relevant for each other, such as rpm, driving speed, time, etc., together with an identifier (ID), which is specific to the operating data,
characterized in that in the individual microprocessors (M1 - MN), an access key marker field (TB) is accessed by means of the respectively received identifier (ID), in which field the access key markers of the kind of operating data types, which are to be received in the relevant microprocessor (M1 - MN), are filed, and whenever an access key marker is found there, the relevant identifier (ID), as well as the accompanying transmitted operating data (MES), is received, stored, and processed, and that in the control station processor (M1), depending on its respective dialogue state, which is achieved according to the program by an operation of the control keypad (TA) and/or a selector switch (WS) with numerous switch positions, the operating data (MES) continually received in the control station processor (M1), depending respectively upon its identifier (ID), is transformed into analog pictograms (P1), numeric depictions (Z1), and/or textual depictions (TD) and is respectively adjusted for updating and stored in at least one display field (BF1 - BF8) of a screen mask, which is associated with the respective dialogue state, and thus a continually updated display memory content is depicted on the screen (V).

2. The agricultural machine as defined by claim 1, characterized in that the key marker field is a two-dimensional table (TB) in which the key markers of operating data types to be received are stored as a one, and the table (TB) is respectively addressed and read purposefully with a first identifier section (ID1) of a received identifier (ID) and the remaining second identifier section (ID2), binarily enciphered with the read-out table line content (TZ), is AND-combined to the correct place in bit-type configuration, and whenever a coincidence has been determined, the identifier (ID) and the transmitted operational data (MES) affiliated with it is accepted, stored, and processed.

3. The agricultural machine as defined by claim 1 or 2, characterized in that the first identifier section (ID1) is eight bits long and the second identifier section (ID2) has three bits and in accordance with this, the table (TB) contains 256 addressable 8-bit words, wherein the individual bit positions occupied with a one each represent one of the operating key markers of a relevant operating message type to be received.

4. The agricultural machine as defined by one of the foregoing claims, characterized in that the identifier (ID) includes a section of 3 bits whose binary values are associated with various processing priorities of the affiliated messages (MES), such as alarms, bulletins, or general messages, such as measurement, actual, and set-point values, and serve as program control criteria of for prioritary handling.

5. The agricultural machine as defined by one of the foregoing claims, characterized in that the control station processor (M1) drives the screen (V) via a display memory whose screen content is divided into screen areas (TB1 - TB8), which, menu-driven by the keypad (TA), are periodically loaded with selected operating data (MES), supplied as pictograms (P1), numerical data (Z1), or textual data.

6. The agricultural machine as defined by claim 5, characterized in that there are eight screen areas (TB1 - TB8), of which the first always shows the current time and date, the eighth contains a main menu bar of pictograms, whose activated main menu pictogram is embodied in solid form, the second and the third are the largest screen areas (TB2, TB3), and in a driving state and in a harvesting state, when the threshing unit is switched on, the one of which areas continuously contains a driving speed display, shown numerically and as a pictogram (P1), and the other, in the driving state, contains the engine load, shown numerically and as a pictogram, and in the harvesting state, usually shows a shaker loss display pictogram and a sieve loss pictogram, and the remaining, smaller display fields (BF4 - BF7) contain operating data of the cutting unit and combine harvester and thresher.

7. The agricultural machine as defined by claim 6, characterized in that in each of the four smaller display fields (BF4 - BF7) a selected working width is shown symbolized in bar graph form, the actual cutting heights with up to four selectable, actually adjusted set-point values (S11 - S22) of the cutting height are shown in a semicircular scale and a specified and actual rpm of the threshing drum and fan are shown.

8. The agricultural machine as defined by one of the foregoing claims, characterized in that whenever the control station processor (M1) has received an alarm indicator, part of a pictogram, number, and/or text, which corresponds to the kind of alarm message, is overridingly entered into an associated one of the display areas (BF3 - BF7), the alarm indicator is deleted, and an acoustic alarm signal is switched on until a confirmation key is actuated, whereupon a bulletin indicator is placed and the alarm message is removed from the display area.

9. The agricultural machine as defined by claim 8, characterized in that whenever there is no alarm, but there is a bulletin indicator of an overriding bulletin in the control station processor (M1), by means of a message reception, or after an alarm deletion, a part of a pictogram, number, and/or text, which corresponds to the kind of bulletin, is overridingly entered into an associated one of the display areas (BF3 - BF7), the bulletin indicator is deleted, and a short, acoustic signal is given.

10. The agricultural machine as defined by claim 9, characterized in that whenever there is neither an alarm nor a bulletin indicator, but there is a general message, which is to be associated with the respective types of pictogram or numeric data entered, the message content is entered in updated form there.

11. The agricultural machine as defined by one of the foregoing claims, characterized in that the keypad (TA) for menu control is comprised of seven keys (T9 - T14), which are an actuation key (T9), two cursor keys (T10, T11), a help key (T14), an escape key (T13), and a rocker key (T12) for increasing and reducing respective values selected according to the menu, and the key actuations of these keys (T9 - T14) are constructed in accordance with the program as a function of the display content of the display fields (BF1 - BF8) and the values shown there are stored as operating data and are sent out to the other microprocessors (M2 - MN) provided with corresponding indicators.

12. The agricultural machine as defined by one of the foregoing claims, characterized in that four further operating buttons (T15 - T18) are disposed in a favorable way for gripping by different fingers, on the handle of a control stick (F), which depending on its respective inclination is used for the controlling the speed of the combine harvester and thresher and for steering it.

13. The agricultural machine as defined by claim 12, characterized in that the control stick (F) and the keypad (TA) are disposed in a grasping region of the driver's right hand, the keypad being disposed on it in a favorable way for gripping, adjoining the screen (V) on its side and/or under it.

14. The agricultural machine as defined by claim 11, characterized in that the further operating buttons (T15 - T18) serve respectively to raise the cutting unit, to lower the cutting unit to a cutting height selection, and to an automatic-contouring- system selection, as their actuating signals are respectively evaluated in such a way that upon a short actuation of these buttons (T15 - T18), a higher or lower stored set-point value, which is associated with one of these, of a cutting unit height adjusting device is specified and upon an actuation of the cutting height selection button (T17) or the automatic contour system selection button (T18), a set-point value affiliated with this is specified and an automatic pitch regulating system is switched off or on by corresponding messages being transmitted to a cutting unit microprocessor (M2), which includes corresponding regulating programs, cutting unit adjusting means, sensor means, and adjusting means.

15. The agricultural machine as defined by claim 14, characterized in that whenever the actuation of the further operating button (T15 - T18) has lasted longer than a specified minimum time, the respective set-point value activated in the cutting unit microprocessor (M2) is continuously incremented or decremented in accordance with the key by means of corresponding messages and accordingly, a cutting unit height adjustment takes place and the actual state is constantly determined and transmitted back to the control station processor (M1) and is brought there to the screen and is assumed as the new set-point value when this key is released.

16. The agricultural machine as defined by one of the foregoing claims, characterized in that the selector switch (WS) adjoins the control station processor (M1) on the input side and, periodically controlled by the program, its respective switch position is taken over by the control station processor (M1) and parts of the operating program, which are associated with the individual switch positions, are triggered by the control station processor, wherein in one of the rotary knob positions (CB), the control station processor prepares the menu operation in the harvesting or driving state and in the other selector switch positions, the control station processor respectively produces an adjusting state for the set-point value of an affiliated adjustable unit, which is raised or lowered respectively by means of alternative actuations of a rocker key (T12), wherein a set- point value display is overridingly carried out in one of the display fields (BF7) and wherein, if need be, the switch position is visualized in a pictogram field on one of the pictogram bars, which represent the various switch positions and which are disposed in one of the display fields (BF8) on the screen (V).

17. The agricultural machine as defined by claim 16, characterized in that as a result of each set-point value change, a function monitoring of the affiliated actuating means is carried out and an override or a breakdown, or a short circuit of the same, produces and stores an alarm bulletin on an associated display field.

18. The agricultural machine as defined by claim 16 or 17, characterized in that in the adjusted state the particular established set-point value is symbolized in a bar graph (BD) and numerically represented in the affiliated display field (BF7), which graph overall includes the range between the respective permissible upper and lower limit values of the set-point value.

19. The agricultural machine as defined by claim 18, characterized in that in the adjusting state, a pictogram, which is associated respectively with the actuating member to be adjusted as a function of the set-point value, is entered in the affiliated display field, which pictogram is represented normally when there is an override and otherwise is represented in an inverted depiction.

20. The agricultural machine as defined by one of claims 16 - 19, characterized in that in the harvesting or driving state, upon a transition in one of the adjusting states, the respective cursor position remains stored in memory and upon a return to the harvesting or driving state, the cursor position is produced once more, displayed, and evaluated.

21. The agricultural machine as defined by one of claims 16 - 20, characterized in that the set-point state specifications which are to be adjusted with the selector switch (WS), are the set-point threshing drum rpm, set-point fan rpm, set-point spacing of the concave, set-point sensitivity of each sieve loss sensor, set-point sensitivity of a shaker loss sensor, set-point reel rpm, set-point lower sieve width, set-point upper sieve width, and/or set-point slat elevator rpm.

22. The agricultural machine as defined by one of the foregoing claims, characterized in that the rpm monitoring microprocessor (M3) continuously receives the engine rpm as well as the rpm values of the V-belt driven units, threshing drum, fan, chopper, slat elevator, shaker, elevator, and tailings elevator from the affiliated sensors and compares their rpm ratios to the engine rpm with the menu-driven, learned rpm ratios, which are determined as a function of the drive, and when a specified slippage tolerance limit is exceeded, transmits an alarm to the control station processor (M1) for output, which after an acknowledgment of the alarm, sends out a message to the rpm monitoring microprocessor (M3) to increase the slippage tolerance limit, and stores a corresponding maintenance bulletin, which is output later in a menu-driven manner.

23. The agricultural machine as defined by one of the foregoing claims, characterized in that calibration values, compensation values, and limit values are transmitted in a menu-driven manner to the yield and loss measuring microprocessor (MN) by the control station processor (M1), which values are associated with the various types of grain and are reserved for normal conditions, can be displayed if necessary by the operator in a menu-driven manner and can then be changed or specified once more, and these transmitted values are used for evaluating the loss and harvesting capacity measurement values, and the results are transmitted to the control station processor (M1), where they are entered, pictorially supplied in the harvesting display field (BF3) and are stored for later output to a data carrier (C) or printer, particularly as a harvesting cadastre.

## Revendications

1. Machine agricole, notamment moissonneuse-batteuse comprenant des dispositifs partiels (1 - N), coordonnés à des microprocesseurs (M1 - MN), dont l'un au moins est un processeur maître (M1) avec un clavier de commande (TA) et un moniteur (V), qui, reliés à des organes de mesure, de réglage et/ou d'affichage (V) affectés aux différents dispositifs partiels (1 - N), traitent les données y relatives en guidant et/ou réglant ou affichant, ces microprocesseurs (M1 - MN) étant reliés entre eux par un bus d'information (B) à l'aide de circuits d'interface courants dans le commerce (SS), par l'intermédiaire desquels ils transmettent continuellement, selon un compte-rendu, des données de fonctionnement actuelles (MES), telles que nombres de tours, vitesse de marche, temps etc., avec un identificateur (ID) spécifique aux données de fonctionnement,
caractérisée en ce que
l'indentificateur (ID) respectivement reçu permet d'accéder à une zone de mémoire comprenant une table de clés(TB) dans laquelle sont mémorisés les indicateurs clés des genres de données de fonctionnement à recevoir respectivement par les différents microprocesseurs (M1 - MN) et l'identificateur (ID) concerné et les données correspondantes (MES) ne pouvant être pris en charge, mémorisés et traités que si un indicateur de clé est présent dans cette zone,
et que, selon l'état de dialogue du processeur maître (M1), obtenu, conformément au programme, par un actionnement du clavier de commande et/ou d'un commutateur sélecteur à nombreuses positions de commutation, les données de fonctionnement (MES), continuellement reçues dans le processeur maître (M1) sont transformées, en dépendance de leur identificateur (ID), en pictogrammes analogiques (P1), chiffres (Z1) et/ou textes (TD), réglées actualisantes dans au moins un champ d'image (BF1 - BF8) d'un masque d'écran coordonné à l'état de dialogue respectif et mémorisées, un contenu de la mémoire d'image ainsi continuellement actualisé étant affiché sur le moniteur.

2. Machine agricole selon la revendication 1,
caractérisée en ce que
le champ d'indicateurs clés est une table bidimensionnelle (TB) dans laquelle les indicateurs clés des genres de données de fonctionnement à recevoir sont mémorisés sous forme de Un et que la table (TB) est adressée et lue à la ligne avec une première partiee de mémoire d'identificateur (ID1) d'un identificateur (ID), la deuxième zone (ID2) étant déchiffrée binairement et enchaînée par opération ET avec le contenu des lignes de la table (TZ) lue et l'identificateur (ID) ainsi que les données de service (MES) associées, transmises étant ensuite mémorisés et traités si une coincidence à été constatée.

3. Machine agricole selon la revendication 1 ou 2,
caratérisée en ce que
la première section de l'identificateur (ID1) a une longueur de huit Bits tandis que la deuxième section (ID2) présente trois Bits, la table (TB) contenant donc 256 mots adressables à 8 Bits, les différentes positions de bit occupées par un Un représentant chacune un indicateur de clé d'un genre de message de service important à recevoir.

4. Machine agricole selon l'une des revendications précédentes,
caractérisée en ce que
l'identificateur (ID) comprend une section de 3 bits dont les valeurs significatives binaires sont coordonnées à différentes priorités de traitement des messages correspondants (MES) tels qu'alarmes, avis et informations générales comme valeurs mesurées, réelles et de consigne, et servent de repères de commande programme d'un traitement prioritaire.

5. Machine agricole selon l'une des revendications précédentes,
caractérisée en ce que
le processeur maître (M1) excite le moniteur (V) par l'intermédiaire d'une mémoire d'image dont le contenu visualise est divisé en zones d'écran (TB1 - TB8) qui, par commande par menus à l'aide du clavier (TA), sont périodiquement chargées de données de service (MES) sélectionnées, traitées en tant que pictogrammes (P1), chiffres (Z1) ou textes.

6. Machine agricole selon la revendication 5,
caractérisée en ce
qu'il existe huit zones d'écran (TB1 - TB8) dont la première présente continuellement la date et l'heure actuelles,
la huitième une barre de menus principaux en pictogrammes, le pictogramme de menu principal activé étant affiché en plein,
tandis que la deuxième et la troisième (TB2, TB3), qui sont les plus grandes zones d'écran, présentent, dans un état de course et dans un état de récolte, la batteuse étant en circuit, l'une: un affichage constant de vitesse de course sous forme numérique et de pictogramme (P1) et l'autre un affichage numérique et un pictogramme de la charge du moteur, en état de course, et, en état de récolte, un pictogramme de pertes de secouage et un pictogramme de pertes de tamisage
et les autres petits champs d'image (BF4- BF7) représentent les données de service du dispositif de coupe et du dispositif de battage.

7. Machine agricole selon la revendication 6,
caractérisée en ce que,
les quatre petits champs d'image (BF4 - BF7) représentent respectivement
une largeur de travail sélectionnée, symbolisée par des barres, jusqu'à quatre valeurs de consigne actuellement réglées, sélectionnables pour la hauteur de coupe (S11 - S22) étant représentées sur un cadran gradué, semi-circulaire,
une vitesse de rotation du tambour batteur prédéfinie et actuelle et une vitesse de rotation de la soufflerie prédéfinie et actuelle.

8. Machine agricole selon l'une des revendications précédentes,
caractérisée en ce que,
chaque fois que le processeur maître (M1) a reçu un indicateur d'alarme, une image, des chiffres et/ou un texte correspondant au genre de massage d'alarme est affiché, supervisant, dans un champ d'image associé (BF3 - BF7), l'indicateur d'alarme effacé et un signal acoustique d'alarme lancé jusqu'à confirmation à l'aide de la touche d'accusé de réception, un indicateur d'avis étant alors placé et le message d'alarme éliminé ou champ d'image

9. Machine agricole selon la revendication 8,
caractérisée en ce que
chaque fois qu'il n'y a pas alarme mais indication d'un avis prioritaire dans le processeur maître (M1), par réception d'un message ou effacement d'une alarnme, une image, des chiffres et/ou un texte sont affichés übersteuernd dans le champ d'image associé (BF3 - BF7), l'indicateur d'avis est effacé et un signal acoustique bref est lancé.

10. Machine agricole selon la revendication 9,
caractérisée en ce que
chaque fois qu'il n'y a ni alarme ni indicateur d'avis mais un message général, coordonné aux genres de pictogrammes ou chiffres respectivement enregistrés, le contenu du message y est enregristré et actualise.

11. Machine agricole selon l'une des revendications précédentes,
caractérisée en ce que
le clavier (TA) comprend sept touches (T9 - T14) de commande de menus, à savoir: une touche d'actionnement (T9), deux touches de déplacement du curseur (T10, T11), une touche auxiliaire (T14), une touche de retour (T13) et une touche basculante (T12) permettant l'augmentation et la réduction des valeurs sélectionnées conformément au menu,
que les contenus des champs d'image (BF1 - BF8) sont structuréa conformément au programme, selon l'actionnement de ces touches (T9 - T14), les valeurs y représentées étant mémorisées en tant que donnée de service et, pourvues d'indicateurs adéquats, émises à destination des autres microprocesseur (M2 - MN).

12. Machine agricole selon l'une des revendications précédentes,
caractérisée en ce que
quatre autres touches de commande (T15 - T18) sont disposées, favorablement pour l'actionnement avec différents doigts, sur la poignée du levier (F) qu, en fonction de son inclinaison, commande la vitesse et la conduite de la moissonneuse-batteuse.

13. Machine agricole selon la revendication 12,
caractérisée en ce que
le levier de vitesse (F) ainsi que le clavier (TA) sont disposés favorablement à portée de la main droite du conducteur, à côté et/ou sous le moniteur (V).

14. Machine agricole selon la revendication 11,
caractérisée en ce que
les autres touches de commande (T15 - T18) servent respectivement à la levée et à l'abaissement de l'outil de coupe pour la sélection d'une hauteur de coupe et pour la sélection de l'automatique de contour, leurs signaux d'actionnement étant respectivement exploités de sorte qu'après un bref actionnement de ces touches (T15 - T18) une valeur de consigne supérieure ou inférieure, mémorisée, y relative est prédéfinie à un dispositif de réglage vertical de l'outil de coupe et que lors de l'actionnement de la touche de sélection de la hauteur de coupe (T17) ou de la touche de sélection de contour (T18), une valeur de consigne y relative est prédéterminée et l'automatique de réglage de l'inclinaison est mise en ou hors circuit, des messages correspondants étant transmis à un microprocesseur (M2) qui comprend des programmes de réglages et des auxiliaires de réglage et de captage adéquats, relatifs au dispositif de coupe.

15. Machine agricole selon la revendication 14,
caractérisée en ce que,
lors de l'actionnement de l'une des autres touches de commande (T15 - T18) au-delà d'un temps minimum prédéfini, la valeur de consigne, activée dans le microprocesseur (M2) concernant le dispositif de coupe, est incrémentée ou décrémentée constamment, selon les touches, par messages correspondants et un réglage adéquat de la hauteur de l'outil de coupe effectué
et que l'état réel est continuellement capté et retransféré au processeur maître (M1) où il est sorti sur l'écran de visualisation et adopté comme nouvelle valeur de consigne lorsque cette touche est relâchée.

16. Machine agricole selon l'une des revendications précédentes,
caractérisée en ce que
le commutateur sélecteur (WS) est raccordé, côté entrée, au processeur maître (M1) qui prend périodiquement en charge sa position de commutation par commande programmée et excite respectivement des parts de programmes de commande coordonnées aux différentes positions de commutation, en mettant à disposition le service à l'état de récolte ou à l'état de course, quand le commutateur rotatif est en position (CB) tandis qu'il établit, en fonction des autres positions du commutateur sélecteur, un état de réglage de la valeur de consigne d'un groupe, laquelle est augmentée ou réduite par actionnement alterné d'une touche basculante (T12), l'affichage de la valeur de consigne étant effectué, supervisant, dans le champ d'image (BF7) et la position du commutateur étant, le cas échéant, visualisée, dans un champ (BF8) du moniteur (V), sur une barre de pictogrammes représentant les différentes positions de commutation.

17. Machine agricole selon la revendication 16,
caractérisée en ce que,
faisant suite a un changement de valeur de consigne, un contrôle fonctionnel des auxiliaires de réglage correspondants a lieu et qu'une Übersteuerung ou une défaillance ou un court-circuit de ceux-ci déclenche un alarme, affichée dans le champ d'image correspondant, et est mémorisé.

18. Machine agricole selon la revendication 16 ou 17,
caractérisée en ce que,
dans l'état de réglage, la valeur de consigne respectivement réglée est symbolisée et représentée numériquement, dans le champ d'image correspondant (BF7), dans un diagramme de barres (BD) qui embrasse toute la gamme, entre les valeurs limites supérieures et inférieures admissibles, respectives de la valeur de consigne.

19. Machine agricole selon la revendication 18,
caractérisée en ce que,
dans l'état de réglage, un pictogramme, coordonné à l'auxiliaire de réglage à régler selon la valeur de consigne, est inscrit dans le champ d'image correspond, ce pictogramme étant représenté normalement en cas de supervision et sinon inversé.

20. Machine agricole selon l'une des revendications 16 à 19,
caractérisée en ce que
la position du curseur respectivement en état de récolte ou en état de course demeure mémorisée lors dit passage à l'un des autres états de réglage et est rétablie, affichée et exploitée lors du retour à l'état de récolte ou de courte.

21. Machine agricole selon l'une des revendications 16 à 20,
caractérisée en ce que
les prédéterminations d'état de consigne réglables à l'aide du commutateur sélecteur (WS) sont le nombre de tours de consigne du tambour batteur, le nombre de tours de consigne de la soufflerie, la distance de consigne de la cage de battage, la sensibilité de consigne de chaque détecteur de perte de tamisage, la sensibilité de consigne de chaque détecteur de perte de secouage, le nombre de tours de consigne du treuil, la largeur de maille de consigne du tamis inférieur, la largeur de maille de consigne du tamis supérieur et le nombre de tours du transporteur incliné.

22. Machine agricole selon l'une des revendications précédentes,
caractérisée en ce que
le microprocesseur du relais tachymètre (M3) reçoit continuellement, de la part des palpeurs correspondants, les données relatives au nombre de tours du moteur, ainsi que la vitesse de rotation des groupes entraînés par courroies trapézoïdales, du tambour batteur, de la soufflerie, de la hâcheuse, du transporteur incliné, du secoueur, de l'élévateur et du déverseur et compare leurs rapports de vitesse de rotation par rapport à la vitesse de rotation du moteur avec des gietriebemäßig bestimmten,menugesteuert gelernten Drehzahlverhältnisse et, lors du surpassement de la limite de tolérance de patinage rerespective, lance, aux fins de sortie, une alarme au processeur maître (1), lequel, après confirmation de réception de l'alarme, donne au microprocesseur (M3) relatif au relais tachymétrique un avis d'augmentation de la limite de tolérance de patinage et mémorise un message d'entretien adéquat qui est sorti ulérieurement, commandé par menu.

23. Machine agricole selon l'une des revendications précédentes,
caractérisée en ce que
des valeurs de calibrage, de comparaison et de limite coordonnées aux différentes sortes de céréales, dans des conditions normales, sont transmises par du processeur maître (M1) au microprocesseur de mesure de rendement et de pertes (MN), lesquelles valeurs sont affichées, selon les besoins, par l'opérateur et peuvent être alors modifiées ou nouveau préaffectées et utilisées à l'évaluation des pertes et du rendement de la récole, les résultats étant transférés au processeur maître (M1) où ils sont enregistrés, préparés dans le champ d'image de récolte (BF3) et mémorisés, notamment en tant que cadastre de récolte, aux fins de sortie ultérieure sur un support de données (C) ou sur imprimante.
